# FASCICULE DE BREVET EUROPEEN

(11) **EP 1 922 272 B1**
(45) Date de publication et mention de la délivrance du brevet: **15.10.2008**
(21) Numéro de dépôt: 06792939.8
(22) Date de dépôt: 22.08.2006
(51) Int. Cl.: B65G 47/84, B29C 49/42, B29C 49/36

(54) **DISPOSITIF DE CHARGEMENT DE RECIPIENTS SUR UN ELEMENT DE TRANSPORT COMPORTANT DES MOYENS D'EJECTION DES RECIPIENTS MAL CHARGES**
VORRICHTUNG ZUM LADEN VON BEHÄLTERN AUF EIN TRANSPORTELEMENT MIT MITTEL ZUM AUSWURF FALSCH GELADENER BEHÄLTER
DEVICE FOR LOADING CONTAINERS ON A TRANSPORTING ELEMENT PROVIDED WITH MEANS FOR EJECTING INCORRECTLY LOADED CONTAINERS

(30) Priorité: 29.08.2005 FR 0552589
(43) Date de publication de la demande: 21.05.2008
(73) Titulaire: Sidel Participations, 76930 Octeville Sur Mer (FR)
(72) Inventeur: GILLET, Denis, F-76930 Octeville Sur Mer (FR); DEAU, Thierry, F-76930 Octeville Sur Mer (FR); BENICH, Yvan, F-76930 Octeville Sur Mer (FR)
(74) Mandataire: Kohn, Philippe
(86) Numéro de dépôt international: PCT/EP2006/065550
(87) Numéro de publication internationale: WO 2007/025908

(56) Documents cités:
- WO-A-20/06010141
- FR-A- 2 864 051
- US-A- 3 637 074
- US-B1- 6 258 313
- PATENT ABSTRACTS OF JAPAN vol. 2003, no. 12, 5 décembre 2003 (2003-12-05) & JP 2004 276372 A (TOYO SEIKAN KAISHA LTD), 7 octobre 2004 (2004-10-07)
- PATENT ABSTRACTS OF JAPAN vol. 2003, no. 12, 5 décembre 2003 (2003-12-05) & JP 2004 299350 A (NISSEI ASB MACH CO LTD), 28 octobre 2004 (2004-10-28)

## Description

L'invention concerne un dispositif de chargement de récipients comportant un col sur un élément de transport, comme celui décrit dans US 3 637 074.

L'invention concerne plus particulièrement un dispositif de chargement de récipients d'axe vertical comportant un col supérieur, et notamment de préformes en matériau thermoplastique, sur un élément de transport qui comporte au moins un organe de préhension individuelle d'un récipient par son col et qui est apte à transporter la préforme le long d'une trajectoire de transport horizontale, du type dans lequel l'organe de préhension est apte à saisir ou libérer le col de la préforme par coulissement vertical de la préforme en position de préhension relativement à l'organe de préhension lors d'une opération de préhension ou de libération de la préforme, le dispositif de chargement comportant des moyens pour éjecter sélectivement le récipient de l'élément de transport, lorsque le récipient est mal pris par l'organe de préhension individuelle postérieurement à l'opération de préhension, lors d'une opération de libération.

La présente invention concerne des perfectionnements apportés aux dispositifs de chargement de récipients ou de préformes présentant un col, notamment de bouteilles, sur un élément de transport qui est équipé d'organes de préhension individuelle des récipients par leur col. Ces organes de préhension sont mutuellement espacés d'un pas prédéterminé et les récipients sont amenés au dispositif de chargement les uns à la suite des autres en étant espacés du pas prédéterminé.

Ces dispositifs de chargement sont notamment adaptés aux installations de fabrication et/ou de remplissage de récipients. Ainsi, dans les installation de fabrication de récipients, des préformes sont transportées par un tel élément de transport à travers un four de préchauffage avant que les préformes ainsi chauffées ne soient transformées en récipient par une opération de soufflage.

Dans ce type d'installation, il arrive que les récipients, et notamment les préformes, soient mal pris ou saisis par l'organe de préhension de l'élément de transport. La préforme risque alors de tomber de l'élément de transport durant son trajet.

Pour éviter ce problème, il est connu d'éjecter les préformes mal prises dés le début du trajet afin que les préformes ne tombent pas à des endroits pouvant mettre en péril le fonctionnement de l'installation, par exemple à l'intérieur d'un four.

Cependant, dans les installations connues, les préformes sont éjectée avec peu de précision, ce qui nécessite de prévoir un zone de récupération des préformes éjectées assez large.

Pour résoudre ce problème, l'invention propose un dispositif de chargement qui comporte des moyens d'éjection des préformes mal prises qui permettent d'éjecter les préformes de manière plus précise, et qui est caractérisé en ce que les moyens pour éjecter le récipient comportent des moyens de réception du récipients qui sont aptes à saisir le récipient préalablement à l'opération de libération et qui sont montés mobiles horizontalement de manière que la trajectoire des moyens de réception soit superposée verticalement et synchronisée avec la trajectoire de l'organe de préhension.

Selon d'autres caractéristiques de l'invention :
- les moyens d'éjection comportent des moyens pour commander l'expulsion du récipient des moyens de réception après l'opération de libération ;
- les moyens de réception comportent une pince qui apte à saisir le récipient par son col par emboîtement élastique réversible de la préforme dans la pince ;
- le dispositif comporte un obstacle qui est agencé sur la trajectoire du corps inférieur du récipient porté par la pince en aval de l'opération de libération du récipient, de manière que le récipient soit arrêté dans sa trajectoire par l'obstacle pendant que la pince poursuit sa trajectoire en provoquant le déboîtement de la préforme par rapport à la pince ;
- les moyens de réception sont montés coulissant verticalement par rapport à l'organe de préhension entre une position haute dans laquelle le récipient porté par la pince est pris par l'organe de préhension, et une position basse dans laquelle le récipient est libéré de l'organe de préhension, le dispositif comportant des moyens pour faire coulisser sélectivement les moyens de réception vers le bas lorsque le récipient est mal pris afin de provoquer l'opération de libération du récipient, les moyens de réception étant maintenus en position basse au moins jusqu'à ce que le récipients soit expulsé par l'obstacle ;
- les moyens de réception comportent un suiveur de came qui est apte à coopérer avec un chemin de came qui est fixe par rapport aux moyens de réception et qui commande les moyens de réception en coulissement vers leur position basse lors de l'opération de libération, le chemin de came comportant un tronçon amont d'aiguillage qui est monté mobile entre une position escamotée dans laquelle les moyens de réception qui ne sont pas orientés vers le chemin de came, restent en position haute, et une position active dans laquelle le rail d'aiguillage oriente le suiveur de came vers le chemin de came afin de commander sélectivement les moyens de réception vers leur position basse ;
- le rail d'aiguillage est monté pivotant par rapport au chemin de came par une de ses extrémités amont ou aval entre sa position escamotée et sa position active ;
- le rail d'aiguillage est monté coulissant par rapport au chemin de came entre sa position escamotable et sa position active ;
- le rail d'aiguillage est monté coulissant selon une direction verticale ;
- le rail d'aiguillage est monté coulissant selon une direction horizontale perpendiculairement à la trajectoire des moyens de réception.

D'autres caractéristiques et avantages apparaîtront au cours de la lecture de la description détaillée qui va suivre pour la compréhension de laquelle on se reportera aux dessins annexés parmi lesquels :
- la figure 1 est une vue en plan qui représente un dispositif de chargement et de déchargement qui est réalisé selon les enseignements de l'invention ;
- la figure 2 est une vue de côté à plus grande échelle qui représente des préformes qui sont saisies par des mandrins portés par une chaîne de transport ;
- la figure 3 est une vue similaire à celle de la figure 1 à plus grande échelle qui représente une zone de chargement des préformes sur la chaîne de transport ;
- la figure 4 est une vue schématique de coté qui représente des préformes durant l'opération de préhension par les mandrins ;
- la figure 5 est une vue similaire à celle de la figure 4 qui représente le cheminement d'une préforme qui est mal prise par un mandrin.

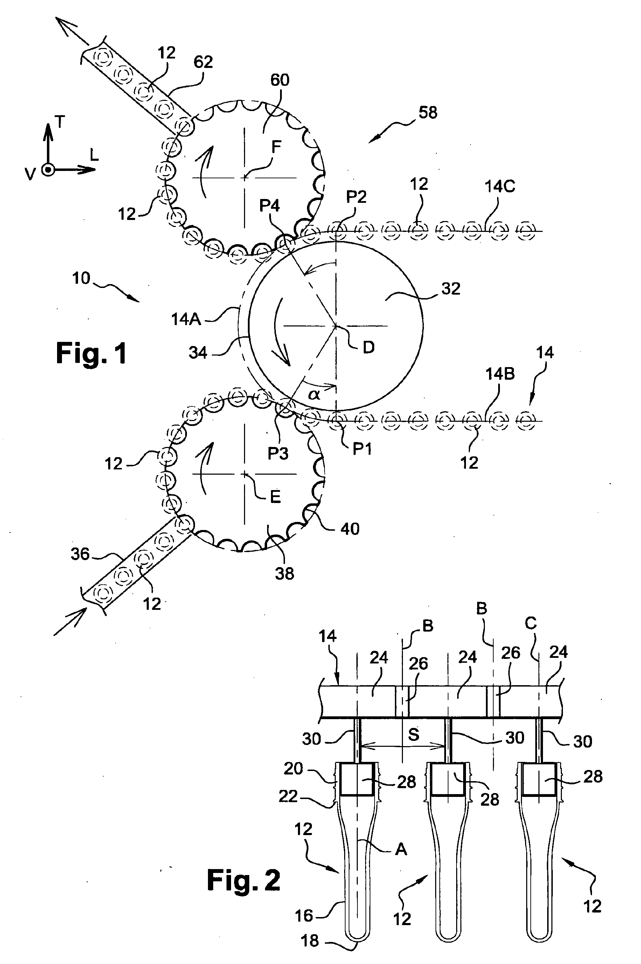

Dans la suite de la description, on utilisera à titre non limitatif une orientation longitudinale, verticale et transversale qui est indiquée par le trièdre L,V,T de la figure 1.

Par la suite, des éléments identiques, analogues ou similaires seront désignés par des mêmes numéros de référence.

On a représenté à la figure 1 un dispositif de chargement 10 de récipients 12 sur un élément de transport 14.

Les récipients 12 sont ici des préformes qui sont constituées d'un matériau thermoplastique, tel que du polyéthylène téréphtalate (PET), et qui sont destinées à être transformées en récipients, tel que des bouteilles, après une première opération de chauffage pour ramollir le thermoplastique les constituant, puis une seconde opération de soufflage ou d'étirage-soufflage, pour conformer la préforme 12 en récipient.

De façon connue, chaque préforme 12 a une forme d'éprouvette ou de tube à essai d'axe vertical "A". Comme représentée à la figure 2, le corps tubulaire 16 de la préforme 12 est fermé à son extrémité inférieure par un fond hémisphérique 18 tandis que son extrémité supérieure comporte un col 20 qui forme le goulot du récipient définitif.

La jonction entre le corps tubulaire 16 et le col 20 est délimitée par une collerette 22 qui s'étend horizontalement en saillie vers l'extérieur. La face cylindrique externe 20 du col comporte ici un pas de vis qui est destiné à recevoir un bouchon fileté (non représenté) afin de fermer le récipient.

L'élément de transport 14 des préformes 12 est ici un élément flexible tel qu'une chaîne sans fin de transport qui forme une boucle fermée s'étendant dans un plan horizontal. Comme représenté à la figure 2, la chaîne de transport 14 comporte une pluralité de maillons 24 qui sont articulés les uns aux autres par l'intermédiaire de charnières 26 d'axe vertical "B".

L'élément de transport 14 comporte une pluralité d'organes de préhension 28 qui sont ici des mandrins. Chaque mandrin 28 est porté par un maillon 24 de la chaîne de transport 14. Les mandrins 28 sont espacés d'un pas prédéterminé "S" qui correspond ici à la distance entre les charnières 26 d'un maillon 24.

Chaque mandrin 28 est plus particulièrement porté par une tige 30, aussi appelée tournette, d'axe vertical "C" qui s'étend verticalement vers le bas depuis le milieu d'une face inférieure du maillon 24.

L'extrémité inférieure de chaque tige 30 porte le mandrin 28 qui comporte une pluralité de mors (non représentés) qui sont mobiles radialement par rapport à l'axe "C" du mandrin entre une position rétractée dans laquelle le mandrin 28 est apte à être inséré à l'intérieur du col 20 d'une préforme 12, et une position expansée dans laquelle les mors sont aptes à exercer une pression radiale contre la paroi cylindrique interne du col 20 de la préforme 12 afin que la préforme 12 soit fixée par friction au mandrin 28. Les mors sont rappelés élastiquement vers leur position expansée.

Ainsi, lors d'une opération de préhension de la préforme 12 par le mandrin 28, le mandrin 28 est inséré à force verticalement à l'intérieur du col 20 de la préforme 12 par coulissement vertical relatif du mandrin 28 par rapport à la préforme 12, ce qui provoque une rétraction des mors à l'encontre de la force de rappel élastique.

Dans le mode de réalisation représenté aux figures 2, 4 et 5, la tige 30 est montée à rotation autour de son axe "C" par rapport au maillon 24 afin de pouvoir faire tourner la préforme 12 sur elle-même autour de l'axe "C" lors de son transport par la chaîne de transport 14.

Comme représenté à la figure 1, la chaîne de transport 14 est ici entraînée en rotation ou au moins guidée en rotation, par une roue d'entraînement 32. La roue d'entraînement 32 est montée à rotation autour de son axe central vertical "D" et elle est entraînée en rotation dans un sens anti-horaire en se référant à la figure 1.

Une portion courbe 14A de la chaîne de transport 14 est enroulée autour d'une portion de jante périphérique 34 de la roue d'entraînement 32. La portion courbe 14A de chaîne de transport 14 forme ici un demi-cercle.

La chaîne de transport 14 comporte aussi une portion rectiligne aval ou brin aval 14B qui est agencée tangentiellement à la roue d'entraînement 32 en aval de la portion courbe 14A selon le sens de rotation anti-horaire de la chaîne de transport 14.

La chaîne de transport 14 comporte aussi une portion rectiligne amont ou brin amont 14C qui est agencée tangentiellement à la roue d'entraînement en amont de la portion courbe 14A selon le sens de rotation anti-horaire de la chaîne de transport 14.

La chaîne de transport 14 est apte à transporter successivement chaque préforme 12 portée par un mandrin 28 depuis un point d'entrée "P1" au niveau duquel la préforme 12 est prise par le mandrin 28, jusqu'à un point de sortie "P2" au niveau duquel la préforme 12 est libérée du mandrin 28, le long d'une trajectoire de transport en passant à travers au moins une zone de chauffage (non représentée).

Afin que le pas prédéterminé "S" entre les mandrins 28 soit le même tout le long de la chaîne de transport 14, aussi bien sur les brins rectilignes 14B, 14C que sur la portion courbe, l'axe "C" des mandrins et l'axe "B" des charnières suivent une unique trajectoire commune le long de la chaîne.

Le dispositif de chargement 10 comporte des moyens d'alimentation en préformes 12 qui sont destinés à acheminer les préformes 12 les unes à la suite des autres jusqu'à la chaîne de transport 14 par l'intermédiaire de moyens de distributions des préformes 12 aux organes de préhension 28 qui seront décrits plus en détail par la suite.

Les moyens d'alimentation comportent ici une glissière 36 et une roue de transfert d'entrée 38 qui est montée à rotation autour de son axe central vertical "E".

La roue de transfert d'entrée 38 comporte des encoches de réception 40 des cols 20 des préformes 12 qui sont mutuellement espacées circonférentiellement du pas prédéterminé "S". Ces encoches 40 sont aptes à recevoir les cols 20 des préformes 12 arrivant par la glissière 36 et à soutenir les préformes 12 grâce à leur collerette 22 saillante qui prend appui sur le bord des encoches 40.

Ainsi, la glissière 36 guide successivement chaque préforme 12 jusqu'à la roue de transfert d'entrée 38 de manière à distribuer chaque préforme 12 dans une encoche 40 associée.

Les encoches 40 de la roue de transfert d'entrée 38 sont ici agencées à une altitude inférieure à celle des mandrins 28 de la chaîne de transport 14.

Comme représenté à la figure 1, en projection plane, la roue de transfert d'entrée 38 est ici agencée de manière tangente à la portion courbe 14A de la chaîne de transport 14 en un premier point d'intersection "P3".

La roue de transfert d'entrée 38 est entraînée en rotation autour de son axe "E" selon un sens horaire en se reportant à la figure 1. La vitesse de rotation de la roue d'entraînement d'entrée 38 est synchronisée avec la vitesse de rotation de la chaîne de transport 14 de manière qu'un organe de préhension 28 et une encoche 40 de la roue de transfert d'entrée 38 se présentent en synchronisme au premier point d'intersection "P3" à l'aplomb l'un de l'autre.

Selon les enseignements de l'invention, le dispositif de chargement 10 comporte aussi des moyens de distribution des préformes 12 qui sont notamment destinés à maintenir les préformes 12 durant l'opération de préhension par les mandrins 28.

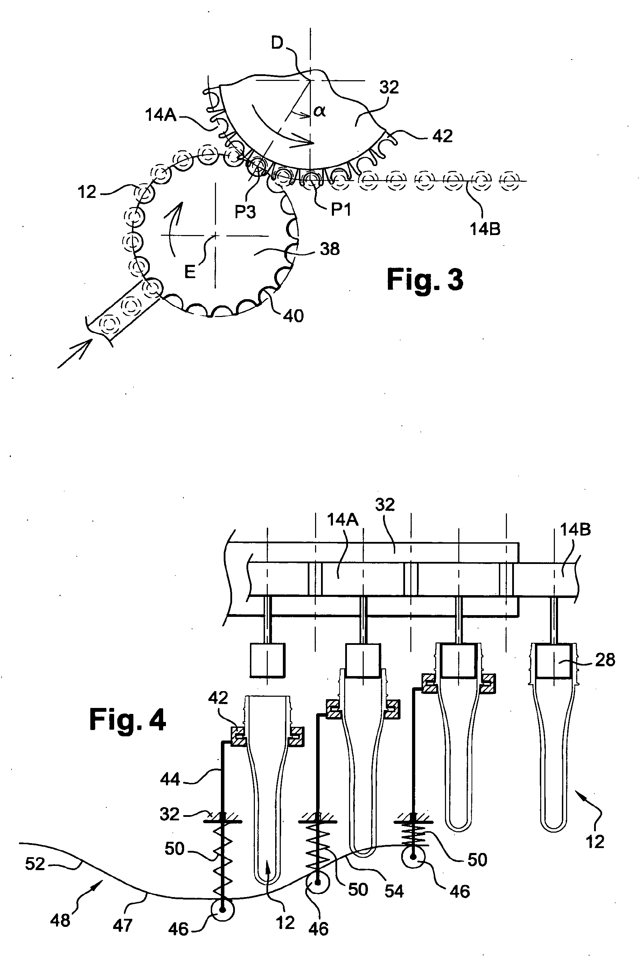

A cet effet, la roue d'entraînement 32 comporte des moyens de réception 42 tels que des pinces comme représenté à la figure 3. Il s'agit ici de pinces 42 rigides dont les mâchoires qui sont immobiles l'une par rapport à l'autre délimitent un logement de forme complémentaire à la forme du col 20 de chaque préforme 12. Les préformes 12 étant réalisée dans un matériau déformable élastiquement, le col 20 de la préforme est emboîté élastiquement de manière réversible entre les mâchoires de la pince 42.

Selon une variante non représentée de l'invention, les pinces 42 ont des mâchoires qui sont articulées entre une position fermée et une position ouverte, les mâchoires étant rappelées élastiquement vers leur position fermée.

Selon une variante non représentée de l'invention, les pinces sont portées par un plateau d'axe coaxial à l'axe "D" de la roue d'entraînement 32.

Les pinces 42 sont réparties sur toutes la circonférences de la roue d'entraînement 32, sensiblement à la même altitude que les encoches 40 de la roues de transfert d'entrée 38. Les pinces 42 sont écartées circonférentiellement les unes des autres du pas prédéterminé "S" de manière qu'une pince 42 soit agencée axialement sous chaque mandrin 28 de la portion courbe 14A de la chaîne de transport 14.

Ainsi, en projection plane la trajectoire circulaire des pinces 42 est superposée à la trajectoire des mandrins 28 tout au long de la portion courbe 14A de la chaîne de transport 14. En d'autres termes, en projection plane, la trajectoire des mandrins 28 est confondue avec la trajectoire des pinces 42 tout au long de la portion courbe 14A de la chaîne de transport 14.

Comme représenté à la figure 4, chaque pince 42 est destinée à recevoir une préforme 12 et à supporter cette préforme au moins durant l'opération de préhension de la préforme 12 par le mandrin 28.

Chaque mâchoire de la pince 42 comporte une gorge qui s'étend radialement par rapport à l'axe "A" de la préforme dans la paroi interne de la mâchoire afin de recevoir la collerette 22. La préforme 12 est ainsi soutenue par la paroi inférieure horizontale de la gorge. La paroi horizontale supérieure de la gorge bloque les déplacements de la préforme 12 vers le haut par rapport à la pince 42. Ainsi, lorsque la collerette 22 est reçue dans la gorge complémentaire de la pince 42, la préforme 12 est bloquée en déplacement vertical dans les deux sens par rapport à la pince 42.

Chaque pince 42 passe au premier point d'intersection "P3" de la roue de transfert d'entrée 38 et de la chaîne de transport 14, en synchronisme avec une encoche 40 de la roue de transfert d'entrée 38. Les pinces 42 étant agencées sensiblement à la même altitude que l'encoche 40, la pince 42 est apte à saisir sous sa collerette 20 la préforme 12 portée par l'encoche 40. La préforme 12 est ainsi transférée depuis la roue de transfert d'entrée 38 sur la roue d'entraînement 32.

Lorsque la préforme 12 est saisie par la pince 42, elle occupe une position dite de préhension dans laquelle l'axe "A" de la préforme 12 est coaxial à l'axe "C" des mandrins 28, les mandrins étant ainsi agencés en vis-à-vis du col 20 de la préforme 12.

Le premier point d'intersection "P3" est agencé sur la portion courbe 14A de la chaîne 14, en amont du point d'entrée "P1" qui est agencé sur la portion courbe 14A de la chaîne 14 en aval du premier point d'intersection "P3", par exemple à l'extrémité aval de la portion courbe 14A. Ainsi, l'opération de préhension dure avantageusement le temps que la pince 42 parcoure un secteur angulaire "P3-P1" d'angle "α".

La trajectoire de la préforme 12 portée par la pince 42 et celle du mandrin 28 sont superposées le long du secteur angulaire "P3-P1" qui forme, en projection plane, une première ligne d'intersection entre la trajectoire des mandrins 28 et celle des pinces 42.

Ainsi, entre le premier point d'intersection "P3" et le point de départ "P1", la préforme 12 est maintenue par la pince 42 dans sa position de préhension au droit du mandrin 28,

Selon un autre aspect de l'invention, l'opération de préhension de la préforme 12 par le mandrin 28 nécessite un mouvement de coulissement vertical de la préforme 12 en position de préhension par rapport au mandrin 28.

Selon les enseignements de l'invention, les pinces 42 sont avantageusement montées coulissantes verticalement par rapport à la roue d'entraînement 32 entre une position basse de transfert dans laquelle la pince 42 est agencée à la même altitude que les encoches 40 de la roue de transfert d'entrée 38 et une position haute de chargement dans laquelle le col 20 de la préforme 12 portée par la pince 42 est à la même altitude que les mandrins 28 de manière que le mandrin 28 soit emmanché dans le col 20.

Comme représenté à la figure 4, le coulissement vertical de chaque pince 42 est ici commandé par un système de came. Ainsi, chaque pince comporte un suiveur de came qui comporte une tige de commande 44. Un galet 46 est monté à rotation à une extrémité inférieure libre de la tige de commande 44 de chaque pince 42.

Le galet 46 est destiné à coopérer avec un chemin de came 47 qui est ici porté par la surface inférieure d'un rail de préhension 48. Le rail de préhension 48 est fixe par rapport à la roue d'entraînement 32, c'est-à-dire que le rail de préhension 48 n'est pas entraîné en rotation par la roue d'entraînement 32.

De plus, chaque pince 42 est rappelée élastiquement vers sa position haute de chargement par un ressort de rappel 50, de sorte qu'il n'est pas nécessaire de prolonger le rail lorsque la pince 42 est en position haute de chargement.

Le chemin de came 47 comporte une première pente amont 52 qui est destinée à commander la descente de la pince 42 vers sa position basse de transfert. Le chemin de came 47 comporte aussi une deuxième pente aval 54 qui est destinée à commander la montée de la pince 42 vers sa position haute de chargement.

La deuxième pente amont 54 s'étend ici sur au moins une portion de la ligne d'intersection correspondant au secteur angulaire d'angle "α", de manière que l'opération de préhension puisse être réalisée pendant une durée suffisamment longue pour assurer un emmanchement fiable du mandrins 28 dans le col 20 de la préforme 12.

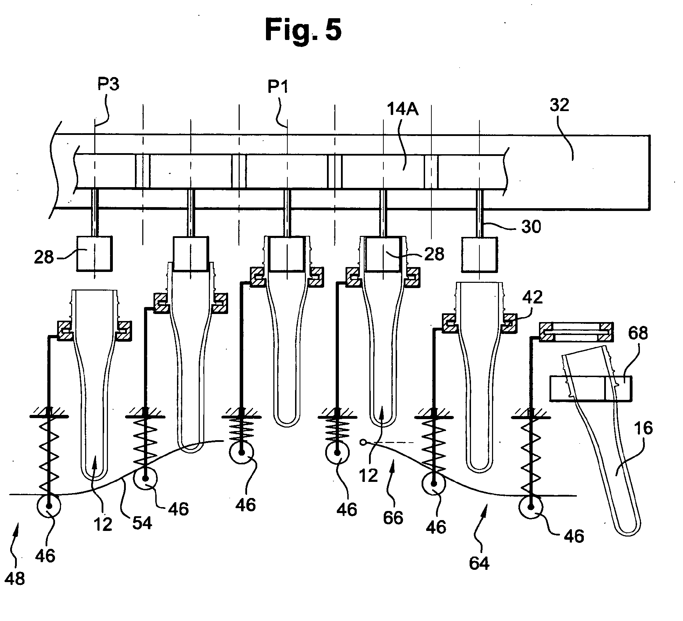

Selon encore un autre aspect de l'invention représenté à la figure 5, le dispositif de chargement 10 comporte des moyens pour éjecter une préforme 12 lorsqu'elle n'est pas correctement saisie par le mandrin 28, par exemple lorsque la préforme 12 est susceptible de tomber lors de son trajet le long de la chaîne de transport 14.

Dans ce cas, le point de départ "P1" des préformes est agencé en amont de l'extrémité aval de la portion courbe 14A de la chaîne de transport 14, de manière que les pinces 42 soient aptes à supporter temporairement les préformes 12 après qu'elles aient été prises par le mandrin 28 jusqu'à l'extrémité de la portion courbe 14A de la chaîne de transport 14.

A cet effet, le dispositif de chargement 10 comporte un capteur (non représenté) pour détecter les préformes 12 mal emmanchées. Le capteur est agencé de manière à détecter un défaut d'emmanchement lorsque la pince 42 est en position haute de chargement, c'est-à-dire lorsque la préforme 12 est saisie par le mandrin 28 et que son col 20 est toujours soutenu par la pince 42.

Les moyens d'éjection comportent aussi un deuxième rail d'éjection 64 qui comporte un chemin de came et plus particulièrement une pente descendante de manière à maintenir la pince 42 en position basse de transfert à l'encontre de l'effort exercé par le ressort de rappel 50 lorsque la préforme 12 est mal emmanchée.

Afin d'engager sélectivement les pinces 42 portant une préforme 12 mal emmanchée vers le rail d'éjection 64, le dispositif 10 comporte un rail d'aiguillage escamotable 66 qui est monté mobile entre une position escamotée dans laquelle il n'est pas interposé dans la trajectoire du galet 46 de manière que la pince 42 demeure en position haute de préhension, et une position active dans laquelle le rail d'aiguillage escamotable 66 est interposé sur la trajectoire du galet 46 de manière à orienter le galet 46 sous le rail d'éjection 64 afin d'abaisser la pince 42 vers sa position basse de transfert.

Lorsque le rail d'aiguillage escamotable 66 est en position active, la pince 42 est rappelée vers sa position basse de transfert par le rail d'éjection 64 en désolidarisant le col 20 par rapport au mandrin 28.

Le rail d'aiguillage escamotable 66 est ici une portion de rail qui est montée pivotant par rapport à son extrémité amont.

Selon une variante de l'invention, le rail d'aiguillage escamotable 66 est une portion de rail qui est montée coulissante verticalement entre une position haute escamotée et une position basse active.

Selon encore une autre variante de l'invention, le rail d'aiguillage escamotable 66 est.une portion de rail qui est montée coulissante radialement par rapport à l'axe "D" de la roue d'entraînement 32, entre une position latérale externe escamotée et une position d'interposition interne active.

Lorsque la préforme 12 mal emmanchée ou mal prise est de nouveau dans sa position basse de transfert, elle est libérée de la pince 42 pour sortir du dispositif 10 et de l'installation 14. La préforme 12 est par exemple libérée de la pince 42 lorsqu'elle n'est plus située sous la chaîne de transport 14, après que les trajectoires des pinces 42 et des mandrins 28 aient divergées.

A cet effet, le dispositif comporte un obstacle tel qu'un premier sabre 68 qui est interposé dans la trajectoire du corps 16 de la préforme 12 lorsque celle-ci a été aiguillée vers sa position basse de transfert par le rail d'aiguillage escamotable 66. Le sabre 68 est ici une plaque qui permet de libérer la préforme 12 de l'emprise de la pince 42 en provoquant le déboîtement de la préforme 12 par rapport à la pince 42.

Comme représenté à la figure 1, l'installation comporte aussi un dispositif de déchargement 58 qui est similaire au dispositif de chargement 10. Ainsi, le dispositif de déchargement 58 comporte une roue de transfert de sortie 60 et une glissière de sortie 62.

La roue de transfert de sortie 60 est agencée à la même altitude que la roue de transfert d'entrée 38, et elle comporte des encoches 40 identiques à celles de la roue de transfert d'entrée 38, et elle est montée à rotation dans un sens horaire autour d'un axe "F" de manière tangente à la roue d'entraînement 32 en un deuxième point d'intersection "P4".

Les pinces 42 de la roue d'entraînement 32 sont aptes à saisir les préformes 12 portées par les mandrins 28 en un point d'arrivée "P2" qui est ici agencé à l'extrémité amont de la portion courbe 14A de la chaîne de transport 14.

La vitesse de rotation de la roue de transfert de sortie 60 est aussi synchronisée avec la vitesse de rotation de la roue d'entraînement 32 de manière qu'une encoche 40 de la roue de transfert de sortie 60 passe en synchronisme avec une pince 42 de la roue d'entraînement 32 au deuxième point d'intersection "P4" qui est agencé en aval du point d'arrivée "P2".

En projection plane, la trajectoire des pinces 42 et la trajectoire des mandrins 28 sont superposées sur une deuxième ligne d'intersection "P2-P4" qui s'étend entre le point d'arrivée "P2" et le deuxième point d'intersection "P4".

Le deuxième point d'intersection "P4" est plus particulièrement agencé en amont du premier point d'intersection "P3" par rapport au sens de rotation de la roue d'entraînement 32.

Ainsi entre le moment auquel la préforme 12 est saisie au point "P3" par une pince 42 et le moment auquel la préforme est transférée sur la roue de transfert de sortie 60 au deuxième point d'intersection "P4", la préforme 12 est maintenue par la pince 42 au droit du mandrin 28 associé.

Lors d'une opération de libération qui s'étend le long de la deuxième ligne d'intersection "P2-P4", la préforme 12 est libérées de l'emprise du mandrin 28 par un mouvement progressif de coulissement vertical vers le bas de la pince 42 qui débute sensiblement au point d'arrivée "P2" et qui se termine sensiblement au deuxième point d'intersection "P4".

Le dispositif de déchargement 58 comporte un deuxième sabre (non représenté) qui est apte à libérer la préforme de l'emprise de la pince 42.

Avantageusement, les mêmes pinces 42 servent donc successivement à maintenir les préformes en position de préhension lors de l'opération de préhension, puis lors de l'opération de libération.

Lors du fonctionnement d'une telle installation de chauffage, les préformes 12 sont acheminée l'une derrière l'autre par la glissière 36 jusqu'à chaque encoche 40 de la roue de transfert d'entrée 38. Puis la roue de transfert d'entrée transporte chaque préforme 12 jusqu'au premier point d'intersection "P3" avec l'élément de transport 14.

Une pince 42 qui est commandée par le rail de préhension vers sa position basse de transfert saisit alors automatiquement la préforme 12 de manière à maintenir la préforme 12 verticalement sous un mandrin 28 associé en position de préhension.

La préforme 12 est alors soutenue par la pince 42, et elle est solidaire en rotation de la roue d'entraînement 32.

La pince 42 est alors rappelée vers sa position haute de préhension par le ressort de rappel 50. Le retour de la pince 42 vers sa position haute de préhension est guidé progressivement par le roulement du galet 46 sous la pente aval 54 du rail de préhension 48. Ainsi, l'opération de préhension s'étend sur le secteur angulaire "P3-P1" d'angle "α" tout au long la trajectoire de la préforme 12 et la trajectoire du mandrin 28 sont superposées, la préforme 12 étant ainsi maintenue strictement verticalement au droit du mandrin 28 par la pince 42.

Lors de l'opération de préhension, la pince 42 monte progressivement la préforme 12 vers le mandrin 28 depuis sa position basse au premier point d'intersection "P3" jusqu'à ce que le mandrin 28 soit emmanché dans le col 20 de la préforme 12 lorsque la préforme 12 passe au point d'entrée "P1" de la trajectoire du mandrin 28.

Lorsque la trajectoire du mandrin 28 et la trajectoire de la pince 42 divergent, la préforme 12 se libère automatiquement de la pince 42, le mouvement divergent de la préforme 12 forçant le déboîtement du col 20 par rapport à la pince 42.

Puis la préforme 12 est transportée tout au long de sa trajectoire jusqu'à son point de sortie "P2" qui est agencé à l'extrémité amont de la portion courbe 14A de la chaîne de transport 14. A ce point, la préforme 12 est saisie par une pince 42 en position haute de préhension.

En projection plane, la pince 42 a une trajectoire "P2-P4" commune et tangente à la trajectoire du mandrin 28 de manière que la pince 42 soit au droit du mandrin 28 au moins entre le point de sortie "P2" auquel la préforme 12 est saisie par la pince 42, jusqu'au deuxième point d'intersection "P4" auquel la préforme 12 est transférée sur la roue de transfert de sortie 60.

Puis la pince 42 est commandée vers sa position basse par un rail de libération (non représenté) similaire au rail de préhension 48. La pince 42 appui sur la collerette 22 de manière à désengager le mandrin 28 du col 20 de la préforme 12. La préforme 12 est ainsi dégagée de l'emprise du mandrin 28.

La préforme 12 est descendue vers une position de transfert dans laquelle la collerette 22 de la préforme 12 est agencée à la même altitude que les encoches 40 de la roue de transfert de sortie 60.

La préforme 12 arrive en position de transfert au deuxième point d'intersection "P4" en synchronisme avec une encoche 40 de la roue de transfert de sortie 60 de manière que la préforme 12 soit transférée sur l'encoche 40 de la roue de transfert 60.

A cet effet, la préforme 12 est libérée de la pince 42 au deuxième point d'intersection "P4" au moyen du deuxième sabre ou d'un système de commande automatique.

## Revendications

1. Dispositif de chargement (10) de récipients (12) d'axe vertical comportant un col (20) supérieur, et notamment de préformes en matériau thermoplastique, sur un élément de transport (14) qui comporte au moins un organe de préhension individuelle (28) d'un récipient (12) par son col (20) et qui est apte à transporter la préforme (12) le long d'une trajectoire de transport horizontale,
du type dans lequel l'organe de préhension (28) est apte à saisir ou libérer le col (20) de la préforme (12) par coulissement vertical de la préforme (12) en position de préhension relativement à l'organe de préhension (28) lors d'une opération de préhension ou de libération de la préforme,
le dispositif de chargement (10) comportant des moyens (42, 68) pour éjecter sélectivement le récipient (12) de l'élément de transport (14), lorsque le récipient (12) est mal pris par l'organe de préhension individuelle (28) postérieurement à l'opération de préhension, lors d'une opération de libération,
**caractérisé en ce que** les moyens pour éjecter le récipient (12) comportent des moyens de réception (42) du récipients (12) qui sont aptes à saisir le récipient (12) préalablement à l'opération de libération et qui sont montés mobiles horizontalement de manière que la trajectoire des moyens de réception (42) soit superposée verticalement et synchronisée avec la trajectoire de l'organe de préhension (28).

2. Dispositif (10) selon la revendication précédente, **caractérisé en ce que** les moyens d'éjection comportent des moyens (68) pour commander l'expulsion du récipient (12) des moyens de réception (42) après l'opération de libération.

3. Dispositif (10) selon la revendication précédente, **caractérisé en ce que** les moyens de réception (42) comportent une pince (42) qui est apte à saisir le récipient (12) par son col (20) par emboîtement élastique réversible de la préforme (12) dans la pince (42).

4. Dispositif (10) selon la revendication précédente, **caractérisé en ce qu'**il comporte un obstacle (68) qui est agencé sur la trajectoire du corps inférieur (16) du récipient (12) porté par la pince (42) en aval de l'opération de libération du récipient (12), de manière que le récipient (12) soit arrêté dans sa trajectoire par l'obstacle (68) pendant que la pince (42) poursuit sa trajectoire en provoquant le déboîtement de la préforme (12) par rapport à la pince (42).

5. Dispositif (10) selon l'une quelconque des revendications précédentes, **caractérisé en ce que** les moyens de réception (42) sont montés coulissant verticalement par rapport à l'organe de préhension (28) entre une position haute dans laquelle le récipient (12) porté par la pince (42) est pris par l'organe de préhension (28), et une position basse dans laquelle le récipient (12) est libéré de l'organe de préhension (28), et **en ce qu'**il comporte des moyens pour faire coulisser sélectivement les moyens de réception (42) vers le bas lorsque le récipient (12) est mal pris afin de provoquer l'opération de libération du récipient (12), les moyens de réception (42) étant maintenus en position basse au moins jusqu'à ce que le récipients (12) soit expulsé par l'obstacle (68).

6. Dispositif (10) selon la revendication précédente, **caractérisé en ce que** les moyens de réception (42) comportent un suiveur de came (44, 46) qui est apte à coopérer avec un chemin de came (64) qui est fixe par rapport aux moyens de réception (42) et qui commande les moyens de réception (42) en coulissement vers leur position basse lors de l'opération de libération, et **en ce que** le chemin de came (64) comporte un tronçon amont d'aiguillage (66) qui est monté mobile entre une position escamotée dans laquelle les moyens de réception (42) qui ne sont pas orientés vers le chemin de came (64), restent en position haute, et une position active dans laquelle le rail d'aiguillage (66) oriente le suiveur de came (44, 46) vers le chemin de came (64) afin de commander sélectivement les moyens de réception (42) vers leur position basse.

7. Dispositif (10) selon la revendication précédente, **caractérisé en ce que** le rail d'aiguillage (66) est monté pivotant par rapport au chemin de came (64) par une de ses extrémités amont ou aval entre sa position escamotée et sa position active.

8. Dispositif (10) selon la revendication 6, **caractérisé en ce que** le rail d'aiguillage (66) est monté coulissant par rapport au chemin de came (64) entre sa position escamotable et sa position active.

9. Dispositif (10) selon la revendication précédente, **caractérisé en ce que** le rail d'aiguillage (66) est monté coulissant selon une direction verticale.

10. Dispositif (10) selon la revendication 8, **caractérisé en ce que** le rail d'aiguillage (66) est monté coulissant selon une direction horizontale perpendiculairement à la trajectoire des moyens de réception (42).

## Claims

1. A device (10) for loading containers (12) with a vertical axis comprising an upper neck (20), and in particular preforms made of thermoplastic material, onto a transporting element (14) which comprises at least one individual member (28) for grasping a container (12) by its neck (20) and which is able to transport the preform (12) along a horizontal transport path,
of the type in which the grasping member (28) is able to catch or release the neck (20) of the preform (12) by vertically sliding the preform (12) into a grasping position relative to the grasping member (28) in an operation for grasping or releasing the preform,
the loading device (10) comprising means (42, 68) for selectively ejecting the container (12) from the transporting element (14), when the container (12) is incorrectly held by the individual grasping member (28) after the grasping operation, in a releasing operation,
**characterized in that** the means for ejecting the container (12) comprise means (42) of receiving the container (12) which are able to catch the container (12) prior to the releasing operation and which are mounted to move horizontally so that the path of the reception means (42) is vertically superimposed and synchronized with the path of the grasping member (28).

2. The device (10) as claimed in the preceding claim, **characterized in that** the ejection means comprise means (68) for controlling the expulsion of the container (12) from the reception means (42) after the releasing operation.

3. The device (10) as claimed in the preceding claim, **characterized in that** the reception means (42) comprise a clamp (42) which is able to catch the container (12) by its neck (20) by reversible elastic fitting of the preform (12) in the clamp (42).

4. The device (10) as claimed in the preceding claim, **characterized in that** it comprises an obstacle (68) which is positioned on the path of the lower body (16) of the container (12) carried by the clamp (42) downstream of the operation for releasing the container (12), so that the container (12) is stopped in its path by the obstacle (68) while the clamp (42) continues its path, causing the preform (12) to be separated from the clamp (42).

5. The device (10) as claimed in any one of the preceding claims,
**characterized in that** the reception means (42) are mounted to slide vertically relative to the grasping member (28) between a top position in which the container (12) carried by the clamp (42) is held by the grasping member (28), and a bottom position in which the container (12) is released from the grasping member (28), and **in that** it comprises means for selectively sliding the reception means (42) downward when the container (12) is incorrectly held in order to provoke the operation for releasing the container (12), the reception means (42) being maintained in the bottom position at least until the container (12) is expelled by the obstacle (68).

6. The device (10) as claimed in the preceding claim, **characterized in that** the reception means (42) comprise a cam follower (44, 46) which is able to cooperate with a cam path (64) which is fixed relative to the reception means (42) and which drives the reception means (42) by sliding to their bottom position in the releasing operation, and **in that** the cam path (64) includes an upstream switching section (66) which is mounted to move between a retracted position in which the reception means (42) which are not oriented towards the cam path (64) remain in the top position, and an active position in which the switching rail (66) directs the cam follower (44, 46) to the cam path (64) in order to selectively drive the reception means (42) to their bottom position.

7. The device (10) as claimed in the preceding claim, **characterized in that** the switching rail (66) is mounted to pivot relative to the cam path (64) by one of its upstream or downstream ends between its retracted position and its active position.

8. The device (10) as claimed in claim 6, **characterized in that** the switching rail (66) is mounted to slide relative to the cam path (64) between its retracted position and its active position.

9. The device (10) as claimed in the preceding claim, **characterized in that** the switching rail (66) is mounted to slide in a vertical direction.

10. The device (10) as claimed in claim 8, **characterized in that** the switching rail (66) is mounted to slide in a horizontal direction perpendicular to the path of the reception means (42).

## Patentansprüche

1. Vorrichtung (10) zum Laden von Behältern (12) mit einer vertikalen Achse und einem oberen Hals (20), insbesondere von Vorformen aus thermoplastischem Material, auf ein Transportelement (14), das mindestens ein einzelnes Greifelement (28) für einen Behälter (12) an dessen Hals (20) aufweist, und das die Vorform (12) entlang einem horizontalen Transportweg transportieren kann, wobei das Greifelement (28) beim Greifen oder Loslassen der Vorform den Hals (20) der Vorform (12) durch vertikale Verschiebung der Vorform (12) in der Greifposition in Bezug auf das Greifelement (28) greifen oder loslassen kann, wobei die Vorrichtung zum Laden (10) Mittel (42, 68) zum selektiven Auswerfen des Behälters (12) des Transportelementes (14) besitzt, wenn der Behälter (12) beim Vorgang des Loslassens nach dem Greifen von dem einzelnen Greifelement (28) falsch gegriffen worden ist, **dadurch gekennzeichnet, dass** die Mittel zum Auswerfen des Behälters (12) Aufnahmevorrichtungen (42) für den Behälter (12) besitzen, die den Behälter (12) vor dem Loslassen greifen können, und die horizontal beweglich derart montiert sind, dass der Weg der Aufnahmevorrichtungen (42) dem Weg des Greifelementes (28) vertikal überlagert und mit ihm synchronisiert ist.

2. Vorrichtung (10) nach dem vorhergehenden Anspruch, **dadurch gekennzeichnet, dass** die Mittel zum Auswerfen Einrichtungen zur Steuerung bzw. Bedienung des Auswerfens des Behälters (12) aus den Aufnahmevorrichtungen (42) nach dem Vorgang des Loslassens besitzen.

3. Vorrichtung (10) nach dem vorhergehenden Anspruch, **dadurch gekennzeichnet, dass** die Aufnahmevorrichtungen (42) eine Klammer (42) aufweisen, mit der der Behälter (12) durch reversibles, elastisches Einstecken der Vorform (12) in die Klammer (42) an seinem Hals (20) ergriffen werden kann.

4. Vorrichtung (10) nach dem vorhergehenden Anspruch, **dadurch gekennzeichnet, dass** sie ein Hindernis (68) aufweist, das auf der Bahn des unteren Elementes (16) des Behälters (12) angeordnet ist, der nach dem Vorgang des Loslassens des Behälters (12) von der Klammer (42) gehalten wird, so dass der Behälter (12) auf seinem Weg durch das Hindernis (68) gestoppt wird, während die Klammer (42) ihren Weg fortsetzt, indem sie das Herausnehmen der Vorform (12) aus der Klammer (42) bewirkt.

5. Vorrichtung (10) nach einem der vorhergehenden Ansprüche, **dadurch gekennzeichnet, dass** die Aufnahmevorrichtungen (42) vertikal verschiebbar zu dem Greifelement (28) zwischen einer oberen Position, in der der Behälter (12), der von der Klammer (42) gehalten wird, von dem Greifelement (28) ergriffen ist, und einer unteren Position, in der der Behälter (12) von dem Greifelement (28) losgelassen wird, montiert sind, und dass sie Einrichtungen aufweist, um die Aufnahmevorrichtungen (42) selektiv nach unten gleiten zu lassen, wenn der Behälter (12) falsch gegriffen wurde, um den Vorgang des Loslassens des Behälters (12) zu bewirken, wobei die Aufnahmevorrichtungen (42) zumindest so lange in der unteren Position gehalten werden, bis der Behälter (12) durch das Hindernis (68) ausgestoßen wird.

6. Vorrichtung (10) nach dem vorhergehenden Anspruch, **dadurch gekennzeichnet, dass** die Aufnahmevorrichtungen (42) eine Nockennachführung (suiveur de came) (44, 46) besitzen, die mit einem Nockenweg (64) zusammenwirken kann, der gegenüber den Aufnahmevorrichtungen (42) befestigt ist, und der die Aufnahmevorrichtungen (42) bei dem Vorgang des Loslassens durch Verschieben in ihre untere Position steuert, und dass der Nockenweg (64) einen vorgelagerten Weichenabschnitt (66) besitzt, der zwischen einer eingefahrenen Position - in der die Aufnahmevorrichtungen (42), die nicht zu dem Nockenweg (64) hin ausgerichtet sind, in einer oberen Position bleiben - und einer aktiven Position - in der die Weichenschiene (66) die Nockennachführung (44, 46) zu dem Nockenweg (64) hin ausrichtet - beweglich montiert ist, um die Aufnahmevorrichtungen (42) selektiv zu ihrer unteren Position hin zu steuern.

7. Vorrichtung (10) nach dem vorhergehenden Anspruch, **dadurch gekennzeichnet, dass** die Weichenschiene (66) über eines ihrer vorgelagerten oder nachgelagerten Enden gegenüber dem Nockenweg (64) zwischen ihrer eingefahrenen Position und ihrer aktiven Position drehbar montiert ist.

8. Vorrichtung (10) nach Anspruch 6, **dadurch gekennzeichnet, dass** die Weichenschiene (66) gegenüber dem Nockenweg (64) zwischen ihrer einziehbaren Position und ihrer aktiven Position verschiebbar montiert ist.

9. Vorrichtung (10) nach dem vorhergehenden Anspruch, **dadurch gekennzeichnet, dass** die Weichenschiene (66) in eine vertikale Richtung verschiebbar montiert ist.

10. Vorrichtung (10) nach Anspruch 8, **dadurch gekennzeichnet, dass** die Weichenschiene (66) in eine horizontale Richtung, senkrecht zu dem Weg der Aufnahmevorrichtungen (42) verschiebbar montiert ist.
